# EUROPEAN PATENT SPECIFICATION

(11) **EP 1 330 376 B1**
(45) Date of publication and mention of the grant of the patent: **02.06.2004**
(21) Application number: 01909572.8
(22) Date of filing: 09.03.2001
(51) Int. Cl.: B60R 9/00

(54) **LOAD CARRIER**
LASTENTRAGER
PORTE-CHARGE

(30) Priority: 01.09.2000 DK 200001302
(43) Date of publication of application: 30.07.2003
(73) Proprietor: Hansen, Jesper Secher, 7200 Grindsted (DK); Dahl, Hans Karsten, 6823 Ansager (DK)
(72) Inventor: Hansen, Jesper Secher, 7200 Grindsted (DK); Dahl, Hans Karsten, 6823 Ansager (DK)
(74) Representative: Tellefsen, Jens J.
(86) International application number: PCT/DK2001/000151
(87) International publication number: WO 2002/018176

(56) References cited:
- WO-A1-95/19897
- DE-A1- 19 805 740
- FR-A1- 2 559 110
- US-A- 5 350 095

## Description

### Background of the invention

The present invention relates to a load carrier for releaseable fastening to a body part of a vehicle, especially the edge of a roof part of a vehicle as defined in the preamble of independent claim 1. The roof carrier comprises at least one load carrying member as well as means for releasably attaching the roof carrier to a part of a vehicle.

When transporting long items, which cannot be fitted inside a transport vehicle, without part of the item extending out of for example a window or a rear door of the vehicle, it is known to use roof carriers. Also in situations where the item to be carried is frequently needed, for example ladders for windowcleaners etc., is it desirable to carry the items on the outside of the vehicle. Usually this type of roof carriers are difficult to mount on the vehicle by a single person, as it requires adjustment of the carrier on both sides of the vehicle and this type of carriers often are heavy and bulky. Especially when the carrier needs to be mounted on a commercial van type of vehicle, which has an elevated roof in comparison with normal cars, is it difficult and cumbersome for a single person to mount carriers known in the art.

A load carrier according to the preamble of claim 1 is known from DE-A-19805740.

It is therefore an aim of the present invention to provide a releasably fastened roof carrier of the type mentioned above, which by simple means allows for quick, simple and safe mounting and releasing on a vehicle. The invention forsees that a number of load carrying devices can be mounted on the vehicle, thus making it possible to transport long items, i.e. ladders, carpets, pipes etc.

The load carrier according to the invention is characterized in that it is intended for releaseable fastening to a part of a vehicle, especially the edge of a roof part of a vehicle as for example a van or a small truck, said load carrier comprises at least one load carrying member as well as fastening means adapted to be releasably fastened to a part of a vehicle wherein the carrier comprises mutual parallel fixing members adapted to engage a part of a vehicle, the parallel fixing members are arranged on separate arms, the arms being connected so that they can rotate independently of each other around a common axis substantially parallel to the longitudinal axis of the fixing members, and that the carrier comprises means to avoid unintentional release of the carrier from a part of the vehicle. By these simple means is it possible for a single person to mount one or several load carriers quickly and easily on the outside of the vehicle body so that it is possible to transport long items, such as ladders, carpets, pipes etc.

In a preferred embodiment the mechanical lock comprises a cylindrical pin which is mounted on one arm and a complementary opening which is arranged on the other arm so that the pin will penetrate the opening when the fastening members are brought into engagement around a body part, such as e.g. the gutter of a vehicle. The end of the pin will reach far enough through the opening so that a fastening member, e.g. a split pin, padlock, nut or the like, is able to be mounted on the end of the pin whereby the two arms and thus the fastening members are fixed in a locked position.

In another advantageous embodiment the load carrier according to the invention is provided with a mechanical lock comprising a moveable member which member is mounted on a central side flange on a first arm, which side flange corporates with two side flanges arranged on a second arm, so that when the arms are folded, the central side flange mounted on the first arm passes inbetween the two side flanges mounted on the second arm, and when the load carrier is in the mounted position the movable member can be brought into a locking position, overlying the two side flanges.

In another advantageous embodiment the load carrier according to the invention is provided with means to avoid unintentional release of the fastening members in the shape of a spring member mounted on two support arms arranged respectively on the two arms, whereby when the fixing members arranged on the arms are brought into fastening engagement with the part of the vehicle, the spring member assures the fastening engagement. This is done by arranging the spring member so that it will push the two support arms apart, and thereby create a moment which will urge the fixing members into engagement with the vehicle part. In order to release the load carrier, an active and determined force is needed in order to overcome the spring action. members into engagement with the vehicle part. In order to release the load carrier, an active and determined force is needed in order to overcome the spring action.

In a further advantageous embodiment, the spring member is a pressurised gas spring member.

In order to avoid damages from wear and tear when mounting, releasing and using the load carrier according to the invention at least one arm is provided with an adjustable pad of soft rubber intended to be pressed against the side of the vehicle when the load carrier is fastened around the vehicle part, for example the gutter. In this way is it also assured that the load carrier is fastened to the vehicle without possible rattle and scratching of the side of the vehicle.

The load carrier can be provided with a number of load carrying members, loosly or fastenable arranged on the arms of the load carrier. The load carrying members can be shaped to accomodate various items needed to be transported.

In order to achieve the maximum suspension height for the transportation of e.g. ladders, it is advantageous that the load carrier according to the invention comprises the mentioned projecting load carrying member(s) mounted near to the top part of an arm.

### Brief description of the drawing

The invention is explained in the following in relation to the drawing, in which
- Fig. 1: shows a view of an embodiment of a load carrier according to the invention with open fastening members,
- fig. 2: shows how the load carrier shown in fig. 1 is mounted by engagement of the fastening members about a part of a vehicle,
- fig. 3: shows a detailled view of the load carrier where the moveable member is il lustrated,
- fig. 4: shows a view of an alternative embodiment of a load carrier according to the invention,

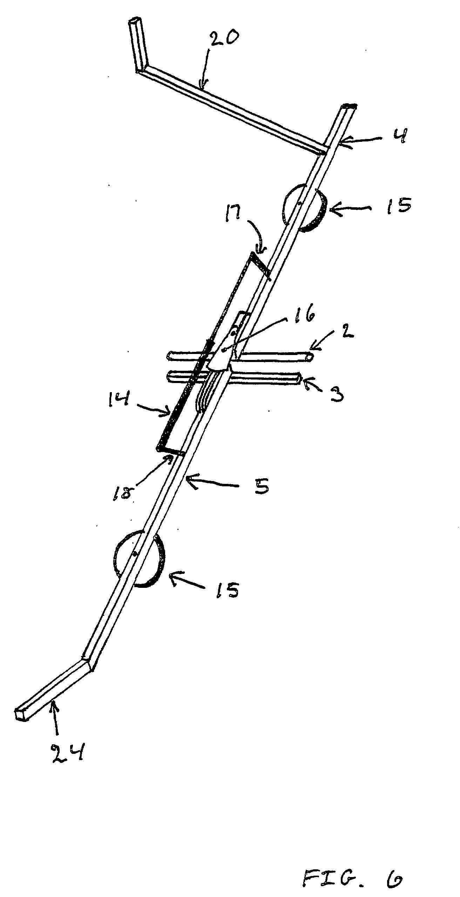

- fig. 5: shows an alternative fastening of the arms,
- fig. 6: shows an embodiment of the load carrier according to the invention, and

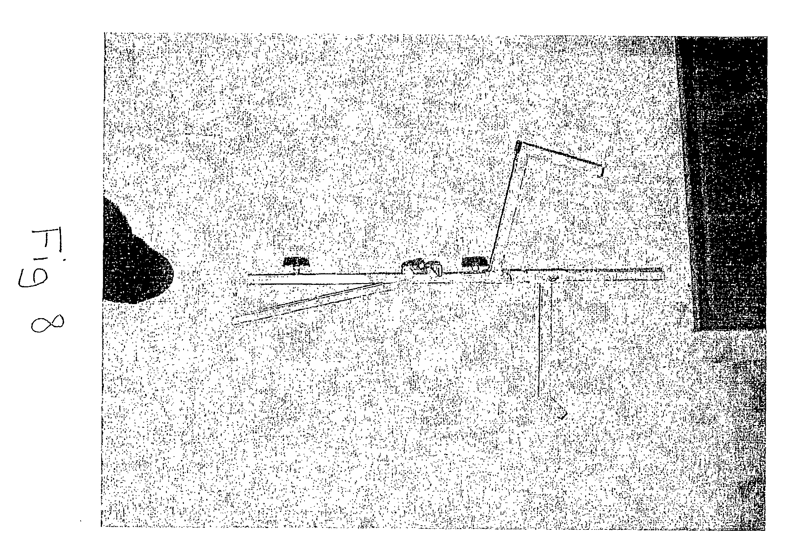

- fig. 7-8: show further embodiments of the invention.

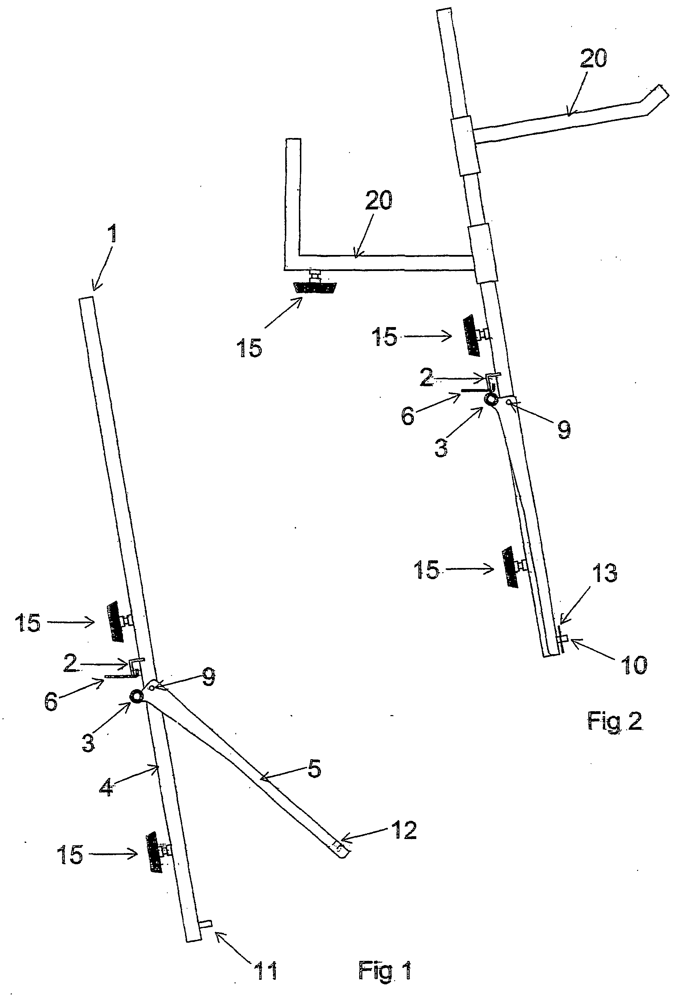

In fig. 1 it is shown how the load carrier comprises two mutually parallel and transverse fastening members 2,3 which are fixed through mutually pivoting arms 4,5 and which, as shown, can be brought into fastening engagement around a body part, for instance the gutter 6 of a vehicle.

One arm 4 is provided with a detachable projection load carrying member 20 which together with a corresponding arrangement serves for the suspension of a long item which cannot be fitted inside the vehicle. At its lower part an arm can be provided with an oblique aiding arm 24, not shown, which is used when mounting the load carrier. On the side of the load carrier intended to face the side of a vehicle the arms are provided with at least one adjustable pad of a cushioning material, for example soft rubber, or other similar material, which is intended to be positioned against the side of the vehicle. Furthermore the load carrying member 20 can also be equiped with an adjustable pad of cushioning material.

In the embodiment of the invention illustrated in fig. 1 and 2, one particular fastening arrangement of the arms is illustrated. The invention, however comprises a number of alternative means of fastening the arms relative to each other once the fastening members are brought into fastening engagement with the body part 6 of the vehicle. In other embodiments of the invention, this is done by arranging a spring member 24, for example a pressurised gas member on respective support arms 17,18. Further fastening arrangements includes an internally threaded opening 21 on the first arm 4, a slightly larger opening 12 on the second arm 5, and a fastening member 19 which is supposed to pass through the opening 12, and engage the thread in the opening 21 provided in the arm 4. The fastening member 19 can for example be in the shape of a bolt.

Furthermore it is envisaged to provide the load carrier with combinations of locking devices and means for avoiding unintentional release of the fastening members within the scope of alternatives as suggested by the invention.

In fig. 2 the load carrier according to the invention is shown fixed to a body part 6, e.g. the gutter of a vehicle. Here the arms 4 and 5 are swung against each other, thus causing the pin 11 to penetrate the opening 12. A fastening device 13, e.g. a split pin, padlock or a nut, has subsequently been fixed on the pin 11, and the arms 4 and 5 are thus fixed in relation to each other and the load carrier is fastened to the body part 6. When the load carrier is to be removed form the body part 6, the fastening device 13 is removed after which the arm 5 can be swung away from the arm 4 and the entire load carrier 1 is removed from the vehicle.

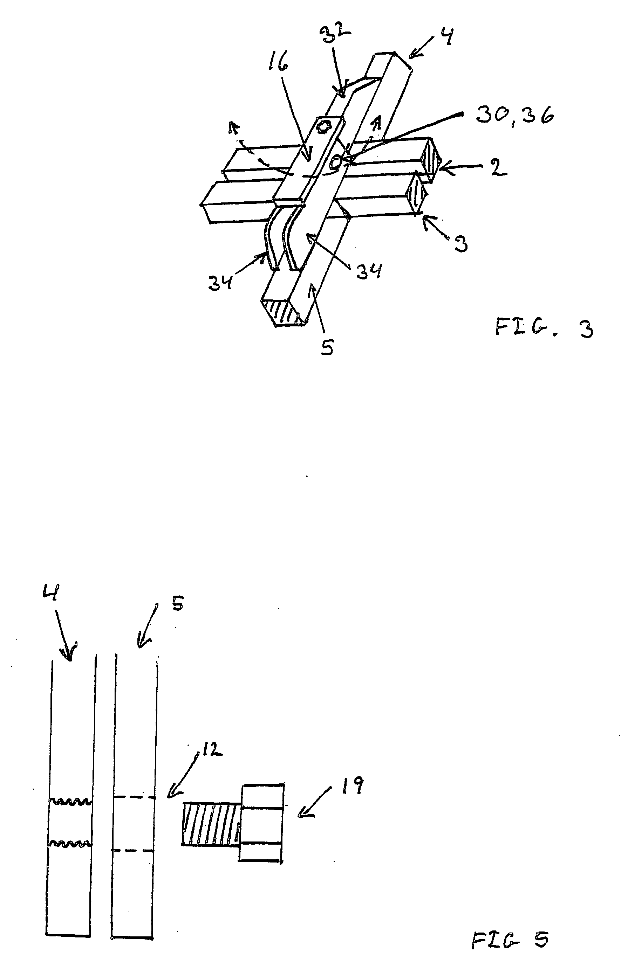

As it appears more clearly in fig. 3, the load carrier in a further embodiment comprises a moveable member 16. The arms 4 and 5 are mutually connected through a hinge 30 comprising a central side flange 32 attached to one arm 4 and projecting side flanges 34 arranged on the second arm 5. The flanges 32,34 are arranged so that when the arms 4,5 are folded around the hinge 30, the central side flange 32 reaches in-between the side flanges 34. The mentioned moveable member 16 is connected on the top side of the side flange 32 in such way that the moveable member 16, when the arms 4 and 5 are swung together so that the fastening members 2,3 are engaging the part 6 of the vehicle, the moveable member 16 is swung over the edges of the side flanges 34 in such a way as to locking the flanges 32,34 in relation to each other, thus preventing the release of the load carrier.

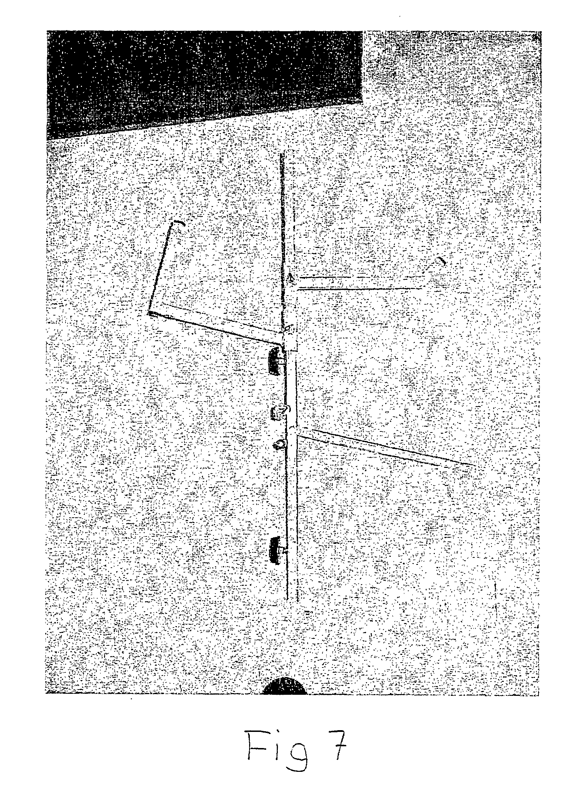

In another advantageous embodiment, as shown in fig. 6 the load carrier 1 according to the invention is provided with means to avoid unintentional release of the fastening members in the shape of a spring member 24 mounted on two support arms 17,18 arranged respectively on the two arms 4,5, whereby when the fixing members 2,3 arranged on the arms 4,5 are brought into fastening engagement with the part 6 of the vehicle, the spring member 24 assures the fastening engagement. This is done by arranging the spring member 24 so that it will push the two support arms 17,18 apart, and thereby create a moment which will urge the fixing members 2,3 into engagement with the vehicle part 6. In order to release the load carrier 1 is an active and determined force needed in order to overcome the spring action.

In one further advantageous embodiment is the spring member a pressurised gas spring member.

In another further advantageous embodiment of the invention, the arms 4,5 are shaped such that when the fixing members 2,3 are engaging the part of the vehicle 6, the arms are folded into each other, for example by one of the arms 4,5 being a U-shape, where the dimensions of the interior of the U can accomodate the other arm, so that the carrier 1, in its mounted state appears to have only a single arm.

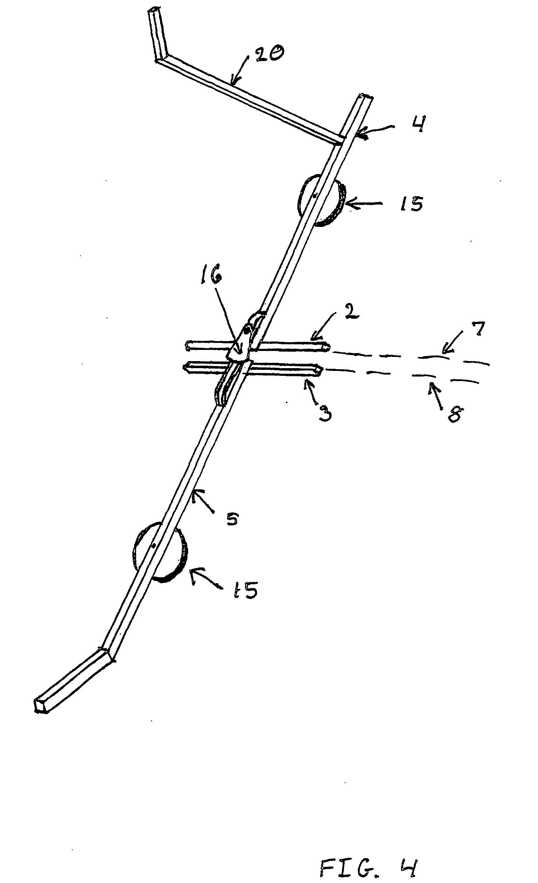

The different means for avoiding unintentional release of the load carrier, as described above, can be used either alone or in any combination of prevention means. For example, is it within the scope of the invention, to combine the pressurised gas spring 24 with the arrangement comprising the moveable member 16 and the flanges 32,34 as shown in fig. 4 or any other combination of features of the invention.

Traditionally, load carriers are made from steel, but the load carrier according to the invention can also be made from aluminium, stainless steel, reinforced plastics or other non-corroding materials.

## Claims

1. Load carrier for releasable fastening to a part of a vehicle, especially the edge of a roof part of a vehicle as for example a van or a small truck, said load carrier comprises at least one load carrying member as well as fastening means adapted to be realisably fastened to a part of a vehicle, the carrier (1) comprises mutual parallel fixing members (2,3) adapted to engage a part (6) of a vehicle, the parallel fixing members (2,3) are arranged on separate arms (4,5), the carrier comprises means (13,14,16) to avoid unintentional release of the carrier from a part (6) of the vehicle, **characterised in that** the arms being connected so that they can rotate independently of each other around a common axis (9,30) substantially parallel to the longitudinal axis (7,8) of the fixing members (2,3).

2. Load carrier according to claim 1, **characterised in that** the means for avoiding unintentional release comprises a cylindrical member (11) arranged on one arm (4) and a corresponding opening (12) in the other arm (5) whereby, when the fixing members (2,3) are brought into fastening engagement with the part (6) of the vehicle, an end part of the cylindrical member (11) penetrates the opening (13) in the arm (5) and allows for arranging a fastening device (13) at said projecting end part, for thereby fixing the two arms (4,5).

3. Load carrier according to claim 1, **characterised in that** the means for avoiding unintentional release comprises a spring member (14) mounted on two support arms (17,18) mounted on the respective arms (4,5), whereby, when the fixing members (2,3) are brought into fastening engagement with the part (6) of the vehicle, the spring member (14) assures the fastening engagement.

4. Load carrier according to claim 3, **characterised in that** the spring member (14) is a pressurised gas spring.

5. Load carrier according to claim 1, **characterised in that** the means for avoiding unintentional release comprises an internally threaded opening (21) in a first arm (4) and an opening in the second arm (5) and an externally threaded fastening member (19), adapted to be introduced through the opening in the second arm (5) and be screwed into the first arm (4).

6. Load carrier according to any of the preceding claims, **characterised in that** the means for avoiding unintentional release comprises a moveable member (16), which member (16) is mounted on a central side flange (32) on a first arm (4), which side flange (32) corporates with two side flanges (34) arranged on a second arm (5), so that when the arms (4,5) are folded, the central side flange (32) mounted on the first arm passes in-between the two side flanges (34) mounted on the second arm (5), and when the load carrier is in the mounted position the movable member (16) can be brought into a locking position, overlying the two side flanges (34).

7. Load carrier according to any of the preceding claims, **characterised in that** one of the arms (4,5) is adapted to recieve the other arm within its cross section, for example by one arm being of a U-shaped cross section while the other arm has an outer dimension which can fit inside the first arm.

8. Load carrier according to any of the preceding claims, **characterised in that** the arms (4,5) and/or the load carrying members (20) are equipped with adjustable pads (15) made of a cushioning material, on the side of the carrier (1) adapted to face the vehicle.

## Patentansprüche

1. Lastenträger zur lösbaren Befestigung an einem Abschnitt eines Fahrzeugs, insbesondere dem Rand eines Dachabschnitts eines Fahrzeugs, wie beispielsweise eines Vans oder eines Kleinlasters, wobei der Lastenträger wenigstens ein Lasten tragendes Teil sowie eine Befestigungseinrichtung aufweist, die lösbar an einem Abschnitt eines Fahrzeugs befestigbar ist, wobei der Träger (1) wechselseitig parallele Befestigungsteile (2, 3) für den Eingriff an einem Abschnitt (6) eines Fahrzeugs aufweist, wobei die parallelen Befestigungsteile (2, 3) auf separaten Armen (4, 5) angeordnet sind, wobei der Träger eine Einrichtung (13, 14, 16) zur Vermeidung einer unbeabsichtigten Freigabe des Trägers von einem Abschnitt (6) des Fahrzeugs aufweist, **dadurch gekennzeichnet, daß** die Arme derart miteinander verbunden sind, daß sie unabhängig voneinander um eine gemeinsame Achse (9, 30) im wesentlichen parallel zur Längsachse (7, 8) der Befestigungsteile (2, 3) drehbar sind.

2. Lastenträger nach Anspruch 1, **dadurch gekennzeichnet, daß** die Einrichtung zur Vermeidung eines unbeabsichtigten Lösens ein zylindrisches Teil (11), das auf einem Arm (4) angeordnet ist, und eine zugeordnete Öffnung (12) in dem anderen Arm aufweist, wobei dann, wenn die Befestigungsteile (2, 3) in befestigendem Eingriff mit dem Abschnitt (6) des Fahrzeugs gebracht sind, ein Innenabschnitt des zylindrischen Teils (11) die Öffnung (13) in dem Arm (5) durchdringt und die Anordnung einer Befestigungseinrichtung (13) an dem vorstehenden Endabschnitt ermöglicht, um dadurch die beiden Arme (4, 5) zu befestigen.

3. Lastenträger nach Anspruch 1, **dadurch gekennzeichnet, daß** die Einrichtung zur Vermeidung eines unbeabsichtigten Lösens ein Federteil (14) aufweist, das auf zwei Haltearmen (17, 18) montiert ist, die auf den entsprechenden Armen (4, 5) montiert sind, wobei dann, wenn die Befestigungsteile (2, 3) in befestigenden Eingriff mit dem Abschnitt (6) des Fahrzeugs gebracht worden sind, das Federteil (14) den befestigenden Eingriff gewährleistet.

4. Lastenträger nach Anspruch 3, **dadurch gekennzeichnet, daß** das Federteil (14) eine Gasdruckfeder ist.

5. Lastenträger nach Anspruch 1, **dadurch gekennzeichnet, daß** die Einrichtung zur Vermeidung eines unbeabsichtigten Lösens eine Öffnung (21) mit Innengewinde in einem ersten Arm (4) und eine Öffnung in dem zweiten Arm (5) und ein Befestigungsteil (19) mit Außengewinde aufweist, das durch die Öffnung in dem zweiten Arm (5) einführbar und in den ersten Arm (4) schraubbar ist.

6. Lastenträger nach einem der vorangehenden Ansprüche, **dadurch gekennzeichnet, daß** die Einrichtung zur Vermeidung eines unbeabsichtigten Lösens ein bewegbares Teil (16) aufweist, das auf einem zentralen Seitenflansch (32) eines ersten Arms (4) montiert ist, welcher Seitenflansch (32) mit zwei Seitenflanschen (34) gebildet ist, die auf einem zweiten Arm (5) derart angeordnet sind, daß dann, wenn die Arme (4, 5) gefaltet sind, der zentrale Seitenflansch (32), der auf dem ersten Arm montiert ist, zwischen die beiden Seitenflansche (34) tritt, die auf dem zweiten Arm (5) montiert sind, und dann, wenn der Lastenträger sich in der montierten Stellung befindet, das bewegbare Teil (16) in eine Verriegelungsstellung bringbar ist, in der es die beiden Seitenflansche (34) überlagert.

7. Lastenträger nach einem der vorangehenden Ansprüche, **dadurch gekennzeichnet, daß** einer der Arme (4, 5) zur Aufnahme des anderen Arms innerhalb seines Querschnitts vorgesehen ist, z.B. mit einem Arm, der einen U-förmigen Querschnitt besitzt, während der andere Arm eine Außenabmessung aufweist, die innerhalb des ersten Arms passen kann.

8. Lastenträger nach einem der vorangehenden Ansprüche, **dadurch gekennzeichnet, daß** die Arme (4, 5) und/oder die Lastenträgerteile (20) mit einstellbaren Auflagen (15) aus einem Polstermaterial an der Seite des Trägers (1) versehen sind, die auf das Fahrzeug weist.

## Revendications

1. Porte-charge pour la fixation, de façon libérable, à une partie d'un véhicule, spécialement le bord d'une partie de toit d'un véhicule comme par exemple un van ou une camionnette, ledit porte-charge comprenant au moins un élément de porte-charge ainsi que des moyens de fixation adaptés à être fixés, de façon réalisable, à une partie d'un véhicule, le porte-charge (1) comprenant des éléments de fixation parallèles (2, 3) adaptés à engager une partie (6) d'un véhicule, les éléments de fixation parallèles (2, 3) étant agencés sur des bras séparés (4, 5), le porte-charge comprenant des moyens (13, 14, 16) pour éviter une libération non intentionnelle du porte-charge d'une partie (6) du véhicule,
**caractérisé en ce que** les bras sont reliés de sorte qu'ils peuvent tourner indépendamment l'un par rapport à l'autre autour d'un axe commun (9, 30) sensiblement parallèle à l'axe longitudinal (7, 8) des éléments de fixation (2, 3).

2. Porte-charge selon la revendication 1,
**caractérisé en ce que** les moyens pour éviter une libération non intentionnelle comprennent un élément cylindrique (11) agencé sur un bras (4) et une ouverture correspondante (12) dans l'autre bras (5) grâce à quoi, quand les éléments de fixation (2, 3) sont amenés en engagement de fixation avec la partie (6) du véhicule, une partie d'extrémité de l'élément cylindrique (11) pénètre l'ouverture (13) dans le bras (5) et permet d'agencer un dispositif de fixation (13) au niveau de ladite partie d'extrémité en saillie, pour fixer ainsi les deux bras (4, 5).

3. Porte-charge selon la revendication 1,
**caractérisé en ce que** les moyens pour éviter une libération non intentionnelle comprennent un élément élastique (14) monté sur deux bras de support (17, 18) montés sur les bras respectifs (4, 5), grâce à quoi, quand les éléments de fixation (2, 3) sont amenés en engagement de fixation avec la partie (6) du véhicule, l'élément élastique (14) assure l'engagement de fixation.

4. Porte-charge selon la revendication 3,
**caractérisé en ce que** l'élément élastique (14) est un ressort à gaz sous pression.

5. Porte-charge selon la revendication 1,
**caractérisé en ce que** les moyens pour éviter une libération non intentionnelle comprennent une ouverture taraudée (21) dans un premier bras (4) et une ouverture dans le second bras (5) et un élément de fixation fileté (19), adapté à être introduit via l'ouverture dans le second bras (5) et à être vissé dans le premier bras (4).

6. Porte-charge selon une quelconque des revendications précédentes,
**caractérisé en ce que** les moyens pour éviter une libération non intentionnelle comprennent un élément déplaçable (16), lequel élément (16) est monté sur une patte latérale centrale (32) sur un premier bras (4), laquelle patte latérale (32) coopère avec deux pattes latérales (34) agencées sur un second bras (5), de sorte que, quand les bras (4, 5) sont pliés, la patte latérale centrale (32) montée sur le premier bras passe entre les deux pattes latérales (34) montées sur le second bras (5), et quand le porte-charge est dans la position monté, l'élément déplaçable (16) peut être amené dans une position de verrouillage, chevauchant les deux pattes latérales (34).

7. Porte-charge selon une quelconque des revendications précédentes,
**caractérisé en ce que** l'un des bras (4, 5) est adapté à recevoir l'autre bras dans sa section transversale, par exemple, un bras ayant une section transversale en forme de U tandis que l'autre bras présente une dimension externe qui peut s'ajuster à l'intérieur du premier bras.

8. Porte-charge selon une quelconque des revendications précédentes,
**caractérisé en ce que** les bras (4, 5) et/ou les éléments portant la charge (20) sont équipés de patins réglables (15) réalisés en une matière amortissante, sur le côté du porte-charge (1) approprié à faire face au véhicule.
